# EUROPEAN PATENT SPECIFICATION

(11) **EP 4 127 122 B1**
(45) Date of publication and mention of the grant of the patent: **01.05.2024**
(21) Application number: 21718189.0
(22) Date of filing: 19.03.2021
(51) Int. Cl.: C11D 3/20, C11D 1/90, C11D 1/94, C11D 3/00, C11D 3/48, C11D 11/00

(54) **AQUEOUS FOAMING COMPOSITION AND USE THEREOF FOR THE PREVENTION AND/OR INHIBITION OF AEROSOL FORMATION FROM THE REBOUND OF A LIQUID ON A SURFACE**
WÄSSRIGE SCHÄUMENDE ZUSAMMENSETZUNG UND IHRE VERWENDUNG ZUR VORBEUGUNG UND/ODER HEMMUNG DER AEROSOLBILDUNG DURCH RÜCKPRALL EINER FLÜSSIGKEIT AUF EINER OBERFLÄCHE
COMPOSITION MOUSSANTE AQUEUSE ET SON UTILISATION POUR PRÉVENIR ET/OU INHIBER LA FORMATION D'UN AÉROSOL À PARTIR DU REBOND D'UN LIQUIDE SUR UNE SURFACE

(30) Priority: 01.04.2020 IT 202000006820
(43) Date of publication of application: 08.02.2023
(73) Proprietor: Università degli Studi di Foggia, 71122 Foggia (IT)
(72) Inventor: LISO, Arcangelo, 06129 Perugia (IT); VERZICCO, Roberto, 00139 Roma (IT)
(74) Representative: Rimini, Rebecca
(86) International application number: PCT/IB2021/052303
(87) International publication number: WO 2021/198837

(56) References cited:
- DE-A1-102014 004 913
- KR-B1- 100 712 937
- US-A- 5 958 334

## Description

This invention relates to an aqueous foaming composition, effective in preventing and/or inhibiting the formation of aerosols from the rebound of a liquid on a surface, in particular the aerosol that is formed following the rebound of streams of urine on the surfaces of a toilet bowl.

Nosocomial infections are infections acquired in hospitals. They are usually the effect of the transmission of drug-resistant bacteria. Nosocomial infections also include infections that are acquired in the hospital but cause the disease only after the patient is discharged or infections that occur among the staff of the facility (occupational infections).

Importantly, hospitalized patients are more susceptible to infections for many reasons: they may have decreased immunity, or they may have undergone invasive medical procedures and techniques.

In particular, nosocomial infections may cause a prolonged hospital stay and therefore represent a public health burden.

A World Health Organization (WHO) survey of the prevalence in 55 hospitals in 14 countries representing 4 WHO regions (Europe, Eastern Mediterranean, Southeast Asia, and Western Pacific) showed that on average 8.7% of hospital patients had nosocomial infections. The highest prevalence of nosocomial infections was reported by hospitals in the Eastern Mediterranean region and Southeast Asia (11.8% and 10%, respectively). In Europe and the Western Pacific region, the prevalence was 7.7% and 9%, respectively.

From a 2013 prevalence survey of healthcare-associated infections in 17 European countries, the prevalence is around 3.4%. From this survey, the main types of infections were respiratory tract infections (33.6%), symptomatic urinary tract infections (22.3%), and skin infections (21.4%). Obviously, management and healthcare facilities play an important role in the onset and spread of nosocomial infections, and growing evidence is accumulating that the features of the facility, ventilation systems, and water and sanitation systems may be the source of the infection.

In effect, the sanitary conditions of shared bathrooms and toilet seats may play an important role in the transmission of such infections (Johnson D.L., et al. American Journal of Infection Control. 2013: 254-8). It has been shown that a large number of bacteria and viruses, if dispersed on a toilet seat, remain in the toilet bowl even after cleaning due to adsorption on porcelain surfaces, with a gradual (partial) dilution occurring after a certain number of flushes. Pathogenic microorganisms may spread through direct contact with contaminated surfaces and/or through droplets (bioaerosol) produced by flushing the toilet or during urination.

More specifically, the term "bioaerosol" usually indicates a set of particles suspended in the air produced by a living being, for example droplets emitted by speech, coughing or sneezing, or by splashes of urine, which include microorganisms and their fragments, toxins, and waste products in particle form.

Of particular note, bioaerosols that form in toilets as a result of the rebound of urine streams have been shown to be able to travel and even reach the lower respiratory tract.

Bioaerosols therefore represent one of the potential causes of the onset of nosocomial infections, and the role played by this particulate of droplets in the spread of diseases is not limited to the nosocomial area. Recently, some data have shown the presence of the novel coronavirus SARS-CoV-2 in the feces of patients, and it could therefore also be transmitted via feces in the home or in other environments (Holshue ML et al. N. Engl. J. Med. Jan 3, 2020; Chen C. et al. Annals of Int. Med. March 30, 2020). Viral infection of the gastrointestinal tract and potential fecal transmission may persist even after the virus is cleared from the respiratory tract.

Therefore, to control the spread of the virus, additional measures may be useful or necessary to prevent fecal transmission.

The production of bioaerosol while flushing the toilet was moreover reported for the first time in the 1950s by a Danish study (Jessen, C. (1955). Luftborne Mikroorganismer Forekomst og Bekaempelse, p. 103. Copenhagen), which used agar plates to capture the bioaerosol settling out of the air due to gravity. In 1975 the studies by Gerba et al., "Microbiological hazards of household toilet: droplet production and the fate of residual organism," Appl. Microbiol. 1975; 30 (2): 229-237, showed that within the first few hours, contamination occurs predominantly near the toilet, although aerosol particles may persist for a long time in the air with delayed deposition throughout the room.

Recently, studies by Knowlton SD. et al, ("Bioaerosol concentrations generated from toilet flushing in a hospital-based patient care setting"; Antimicrobial Resistance and Infection Control (2018) 7:16) clearly demonstrated that bioaerosol containing microorganisms deriving from feces and from the previous use of the toilet by other users lasts for over 30 minutes.

Over the years, a multitude of devices, accessories and toilet seat configurations have been developed to reduce so-called "rebound streams" and bioaerosols generated by urine when a person uses either toilets or urinals. These devices were primarily aimed at male users, when urinating from a standing position into a toilet or urinal. The impact of urine on the walls of the device, or on the water within the device, creates secondary streams of urine on surrounding surfaces, including the person using the toilet or urinal. Current devices and related accessories in the various configurations are not substantially capable of circumscribing the stream of urine in such a way as to remove the possibility of forming secondary streams or bioaerosol.

Although in recent years a wide range of different urinal configurations have been created which, through elongated shapes, curves, and shields with splash guards, aim to reduce the formation of bioaerosols, most of these devices have the problem of high cost of production and adoption since their use requires significant variations to the common toilet and urinal shapes already present on the market.

JP2015120882 describes a composition which, by chemically reacting with water, generates a layer of foam on the surface of the water stored in a toilet in order to prevent splashes of water, bad smells, and sounds caused by the excretion of urine or feces into a flush toilet.

KR200486073 describes a foam capable of sealing and isolating the water contained inside a toilet bowl from the surrounding environment, thus preventing the spread of odors.

KR100712937 describes a foaming aerosol and its use to deodorize and sterilize a toilet, in particular a flush toilet. More specifically, the foaming aerosol described in KR100712937 contains a surfactant, a stabilizing agent and a propellant, and its use involves applying it to the surface of the water inside the toilet bowl so that the foam floats on the top of the water.

DE102014004913 describes a tablet capable of generating foam when placed in contact with the water inside a toilet. Said tablet contains anionic surfactant compounds and stabilizing agents, including fatty alcohols.

In this context there is therefore an ongoing need to provide new systems that allow the formation of aerosols from the rebound of urine streams in the toilet to be reduced effectively in a simple way, thus counteracting the spread of dangerous bioaerosols that are harbingers of infections, but which at the same time do not have the drawbacks of the systems present in the state of the art.

This and other objects are achieved by means of the aqueous foaming composition as defined in the appended claim 1, the method as defined in the appended claim 13 and the use of the foaming composition as defined in the appended claim 17. Preferred embodiments of the composition, method, and use of the composition of the invention are defined in the dependent claims.

The appended independent and dependent claims form an integral part of this description.

A detailed description of some preferred embodiments of the invention is provided below.

According to the present invention, the aqueous foaming composition comprises at least one betaine. Betaines are a particular class of amphoteric surfactants, known for their emulsifying and stabilizing activity mainly due to their ability to form voluminous micelles.

Betaines suitable for use in the foaming composition of the invention are, for example, alkylbetaines, alkylamidobetaines, sulfobetaines, and any mixture thereof.

The at least one betaine in the foaming composition of the invention is preferably an alkylamidopropylbetaine.

In a preferred embodiment, the at least one betaine is present in the foaming composition in a total amount ranging from 2% to 5%, preferably from 2.5% to 4.5%, more preferably from 3% to 4% by weight of the total weight of the composition, for example in a total amount of 3%, 3.1%, 3.2%, 3.3%, 3.4%, 3.5%, 3.6 %, 3.7%, 3.8%, 3.9%, 4% by weight of the total weight of the composition.

The foaming composition according to the invention also comprises at least one anionic surfactant. As is known in the art, these molecules generally consist of long chains of carbon atoms, ending with a carboxylate, sulfate, or sulfonate group, and are endowed with detergent and foaming properties, often used to increase wettability and to stabilize suspensions and emulsions.

Preferably, the at least one anionic surfactant in the foaming composition of the invention is selected from the group consisting of sulfonated surfactants, alkyl sulfates, alkyl ether sulfates, alkyl aryl sulfates, and any mixture thereof. More preferably, the at least one anionic surfactant is an alkyl sulfate with a linear or branched alkyl chain comprising a number of carbon atoms ranging from 6 to 22, even more preferably from 12 to 18.

More preferably, the at least one anionic surfactant is the sodium salt of an alkyl sulfate with a straight or branched alkyl chain comprising a number of carbon atoms ranging from 12 to 18 (sodium C12-C18 alkyl sulfate).

A particularly preferred anionic surfactant according to the invention is sodium dodecyl sulfate.

In a preferred embodiment, the at least one anionic surfactant is present in the foaming composition in a total amount ranging from 0.3% to 3%, preferably from 0.5% to 2.5%, more preferably from 0.8% to 2% by weight of the total weight of the composition, for example in a total amount of 0.8%, 0.9%, 1%, 1.1%, 1.2%, 1.3 %, 1.4%, 1.5%, 1.6%, 1.7%, 1.8%, 1.9%, 2% by weight of the total weight of the composition.

According to this invention, the foaming composition is characterized by further comprising at least one dialkyl carbonate, preferably a symmetrical dialkyl carbonate. Among the symmetrical dialkyl carbonates suitable for use in the composition of the invention, bis-propylheptyl carbonate is particularly preferred.

Typically, dialkyl carbonates exert a modulatory activity on the pH and contribute to the consistency of the foam in detergent compositions.

In a preferred embodiment, the at least one dialkyl carbonate is present in the foaming composition in a total amount ranging from 0.5% to 3.5%, preferably from 0.8% to 3%, more preferably from 1% to 2% by weight of the total weight of the composition, for example in a total amount of 1%, 1.1%, 1.2%, 1.3%, 1.4%, 1.5 %, 1.6%, 1.7%, 1.8%, 1.9%, 2% by weight of the total weight of the composition.

In a particularly preferred embodiment, the at least one dialkyl carbonate is present in the foaming composition in a total amount of 1.65%, 1.66%, 1.67%, 1.68%, or 1.69% by weight of the total weight of the composition.

In the foaming composition according to the invention there is also present at least one fatty alcohol with a linear or branched, saturated or unsaturated alkyl chain containing at least 4 carbon atoms. Fatty alcohols have an emulsifying power and act as consistency factors in the foams in which they are contained, giving them structure and consistency and extending their duration. In particular, foams containing fatty alcohols are not evanescent and do not collapse rapidly at room temperature.

Preferably, the alkyl chain of the at least one fatty alcohol is a saturated linear chain, more preferably it is a saturated linear chain containing a number of carbon atoms ranging from 6 to 24, even more preferably from 8 to 22.

Among the fatty alcohols suitable for use in the foaming composition of the invention, cetyl alcohol, stearyl alcohol, and any mixture thereof are mentioned by way of non-limiting example.

According to the invention, the use of a mixture comprising cetyl alcohol and stearyl alcohol is particularly preferred,more preferably a mixture comprising 30% cetyl alcohol and 70% stearyl alcohol by weight of the total weight of the mixture.

In the context of this description, a mixture comprising cetyl alcohol and stearyl alcohol as defined above is referred to as "cetostearyl alcohol."

In a preferred embodiment, the at least one fatty alcohol is present in the foaming composition in a total amount ranging from 0.5% to 2.5%, preferably from 0.8% to 2%, more preferably from 1% to 1.5% by weight of the total weight of the composition, for example in a total amount of 1%, 1.1%, 1.2%, 1.3%, 1.4%, 1.5% by weight of the total weight of the composition.

The foaming composition according to the invention further comprises at least one fatty acid ester with a linear or branched, saturated or unsaturated alkyl chain containing at least 4 carbon atoms. Like fatty alcohols, fatty acid esters also contribute to ensure an adequate structure for the foams in which they are contained.

Preferably, the alkyl chain of the fatty acid is a saturated linear chain, more preferably it is a saturated linear chain containing a number of carbon atoms ranging from 6 to 32, even more preferably from 8 to 28, still more preferably from 10 to 24, and most preferably from 12 to 22.

According to a preferred embodiment, the at least one fatty acid ester is selected from the group consisting of isopropyl myristate, cetearyl myristate, and any mixture thereof.

In a preferred embodiment, the at least one fatty acid ester is present in the foaming composition in a total amount ranging from 0.1% to 3%, preferably from 0.4% to 2%, more preferably from 0.5% to 1.5% by weight of the total weight of the composition, for example in a total amount of 0.5%, 0.6%, 0.7%, 0.8%, 0.9 %, 1%, 1.1%, 1.2%, 1.3%, 1.4%, 1.5% by weight of the total weight of the composition.

According to the invention, the foaming composition may also comprise a pH regulator, preferably an organic acid, more preferably lactic acid.

In a preferred embodiment, the pH regulator is preferably present in the foaming composition in an amount ranging from 0.002% to 0.02% by weight of the total weight of the composition, more preferably from 0.005% to 0.01% by weight of the total weight of the composition, for example in a total amount of 0.005%, 0.006%, 0.007%, 0.008%, 0.009%, 0.01% by weight of the total weight of the composition.

According to another preferred embodiment, in the foaming composition according to the invention there is also present at least one deodorizing substance, said deodorizing substance being preferably selected from triethyl citrate, essences of bergamot, antibacterials such as para-aminobenzoic acid derivatives, ricinoleate, and any mixture thereof.

In a preferred embodiment, the at least one deodorizing substance is present in the composition in a total amount ranging from 0.4% to 2.5% by weight of the total weight of the composition, preferably from 0.6% to 2% by weight of the total weight of the composition, more preferably from 0.8% to 1.5% by weight of the total weight of the composition, even more preferably from 0.9% to 1% by weight of the total weight of the composition, for example in a total amount of 0.9%, 0.91%, 0.92%, 0.93%, 0.94%, 0.95%, 0.96%, 0, 97%, 0.98%, 0.99%, 1% by weight of the total weight of the composition.

Optionally, the foaming composition of the invention may further comprise a propellant gas, for example liquefied petroleum gas (LPG), hydrofluoroalkanes, hydrocarbons, such as for example normal butane, nitrous oxide. The presence of a propellant gas in the composition of the invention influences the delivery speed of said foam, and its content is inversely proportional to the consistency of the foam.

In a preferred embodiment, the propellant gas is present in the foaming composition in a total amount ranging from 4% to 15% by weight of the total weight of the composition, preferably from 5% to 12% by weight of the total weight of the composition, more preferably from 6% to 10% by weight of the total weight of the composition, for example in a total amount of 6%, 7%, 8%, 9%, 10% by weight of the total weight of the composition.

In a preferred embodiment, the foaming composition of the invention comprises the following components, the percentage by weight of which is indicated with respect to the total weight of said composition: at least one betaine in an amount ranging from 2% to 5% by weight; at least one anionic surfactant in an amount ranging from 0.3% to 3% by weight; at least one dialkyl carbonate in an amount ranging from 0.5% to 3.5% by weight; at least one fatty alcohol with a linear or branched, saturated or unsaturated alkyl chain, containing at least 4 carbon atoms, in an amount ranging from 0.5% to 2.5% by weight; at least one fatty acid ester with a linear or branched, saturated or unsaturated alkyl chain, containing at least 4 carbon atoms in an amount ranging from 0.1% to 3% by weight; osmotic water in an amount ranging from 78% to 88% by weight and, optionally, a pH regulator in an amount ranging from 0.002% to 0.02% by weight; at least one deodorizing substance in an amount ranging from 0.4% to 2.5% by weight; a propellant gas in an amount ranging from 4% to 15% by weight.

In the context of this invention, the term "osmotic water" means water purified of excess calcium and mineral salts, obtained using a reverse osmosis process.

A first preferred foaming composition of this invention comprises the following components, the percentage by weight of which is indicated with respect to the total weight of said composition: alkylamidopropylbetaine in an amount ranging from 2% to 5% by weight; sodium C₁₂-C₁₈ alkyl sulfate in an amount ranging from 0.3% to 3% by weight; bis-propylheptyl carbonate in an amount ranging from 0.5% to 3.5% by weight; cetostearyl alcohol in an amount ranging from 0.5% to 2.5% by weight; isopropyl myristate or cetearyl myristate in an amount ranging from 0.1% to 3% by weight; osmotic water in an amount ranging from 78% to 88% by weight, and, optionally, lactic acid in an amount ranging from 0.002% to 0.02% by weight; triethyl citrate in an amount ranging from 0.4% to 2.5% by weight; liquefied petroleum gas (LPG) in an amount ranging from 4% to 15% by weight.

A second preferred foaming composition of this invention comprises the following components, the weight percentage of which is indicated with respect to the total weight of said composition: alkylamidopropylbetaine in the amount of 3.7% by weight; sodium C₁₂-C₁₈ alkyl sulfate in the amount of 1% by weight; bis-propylheptyl carbonate in the amount of 1.67% by weight; cetylstearyl alcohol in the amount of 1.4% by weight; isopropyl myristate or cetearyl myristate in the amount of 0.6% by weight; lactic acid in the amount of 0.009% by weight; triethyl citrate in the amount of 0.93% by weight; liquefied petroleum gas (LPG) in the amount of 7% by weight; osmotic water in the amount of 83.7% by weight.

As previously indicated and described in more detail in the experimental part that follows, the foaming composition that is the subject of the invention, when applied to a surface, proved surprisingly endowed with the ability to block the formation of aerosol droplets that are generated as a result of the rebound of a liquid on said surface, for example following the rebound of a stream of urine on the surface of a toilet bowl.

Without wishing to be bound by any one theory, the inventors believe that this surprising property of the foaming composition according to the invention may derive from an action of mechanical trapping of the aerosol droplets exerted by the composition of the invention.

The expression "toilet," as used here, refers to the sanitary device consisting of a toilet bowl, generally ceramic, intended for the disposal of excretions of physiological functions such as urination and defecation. Typically, a toilet is equipped with a seat, often a flip-up seat. Advantageously, the foaming composition of the invention, once applied to a surface, also exhibits considerable stability and persistence, regardless of the ambient temperature, humidity, and ventilation conditions, but for limited time periods, thus allowing its complete removal after use through simple processes, for example by cleaning with the standard amount of water for flushing a toilet.

In particular, no damage has been detected on surfaces of various kinds following the application of the foaming composition of the invention and, after removal of the composition, no traces or residues remain.

Another advantage of the foaming composition of the invention is the ability to form on the application surface a continuous layer of homogeneous consistency, characterized at the same time by considerable adhesion, which is therefore capable of remaining stable on surfaces of various kinds also in a slanting or even vertical position.

Due to the surprising advantageous features described above, the foaming composition according to the invention is particularly suitable for being used for the purpose of preventing and/or inhibiting the formation of aerosols from the rebound of a liquid on a surface.

Therefore, the method as defined in the appended claim 13 and the use of the aqueous foaming composition as defined in the appended claim 15 also fall within the scope of the present invention.

The aqueous foaming composition of the invention is applied to the surface preferably by spraying. The spraying process may be performed manually or automatically, for example by using proximity sensors connected to a dispensing system, and from variable distances. For example, the spraying operation may take place from a short distance, for example a distance of a few centimeters, preferably about 10 cm, up to a distance equal to or greater than 1 meter.

In one embodiment, the foaming composition of the invention forms on the application surface a layer of foam with a thickness ranging from 2 cm to 6 cm, preferably from 3 cm to 5 cm.

Preferably, in the method of the invention, the rebound liquid is animal urine, more preferably the urine of a human subject.

Preferably, the surface is an external surface and/or an internal surface of a toilet bowl. The materials that may make up the external and/or internal surfaces of a toilet include, for example, but not exclusively, ceramic, metal, polycarbonate, hard plastic, glass, and Plexiglas.

In the aforesaid embodiment, the use of the foaming composition of the invention advantageously allows a drastic reduction of the hygienic-sanitary risks from contamination caused by the dispersion in the environment of droplets that are generated by the impact of the stream of urine onto the walls of a toilet, the so-called bioaerosol potential disseminator of diseases as a carrier of pathogenic microbes such as bacteria, viruses, and fungi, cellular material or allergens.

Preferably, the foaming composition of the invention, once applied to cover a surface, remains stable for a time period lasting more than one minute, more preferably for a time period ranging from 1 to 2 minutes.

The experimental part which follows is provided for illustrative and non-limiting purposes of the scope of the invention as defined in the appended claims. In the experimental part reference is made to the appended drawings, wherein:

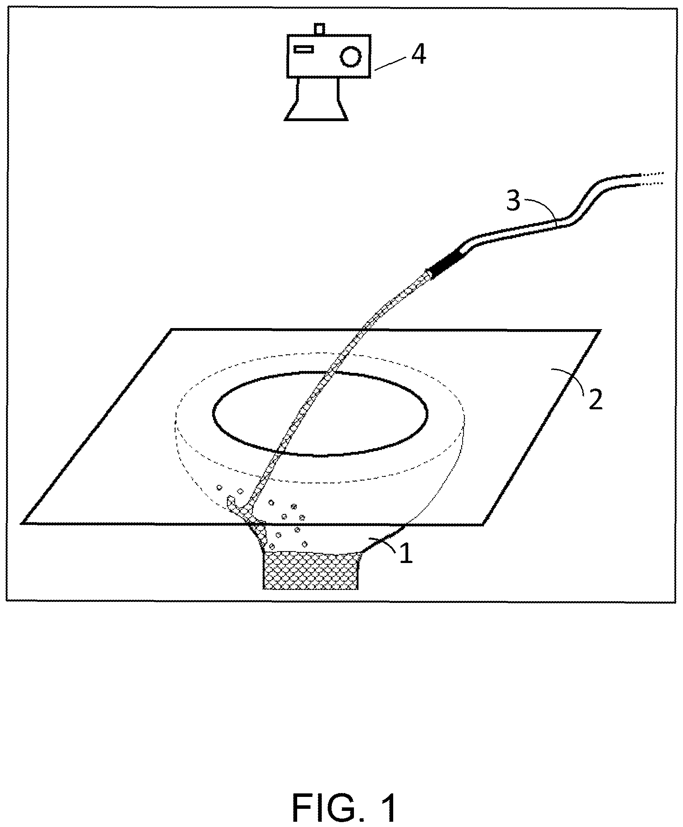

Fig. 1 shows a schematic representation of the system used for the experiments comprising (1) a toilet, (2) a toilet seat on which the blotting paper is placed to perform the tests and (3) a device to simulate urination. At the top is shown the camera (4) used to collect the images;

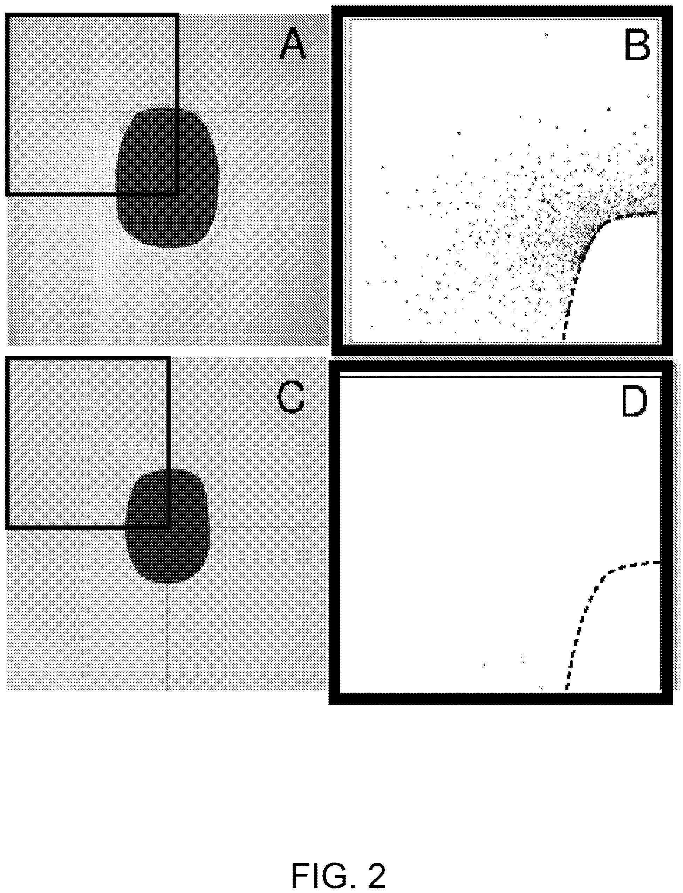

Fig. 2 shows the rebound aerosol formed and collected on the blotting paper of the toilet seat in the absence (A) and in the presence (C) of the foaming composition of the invention. The blotting paper was divided into four quadrants; the images in (B) and (D) are, respectively, an enlargement of the upper left panel of the blotting paper shown in (A) and (C);

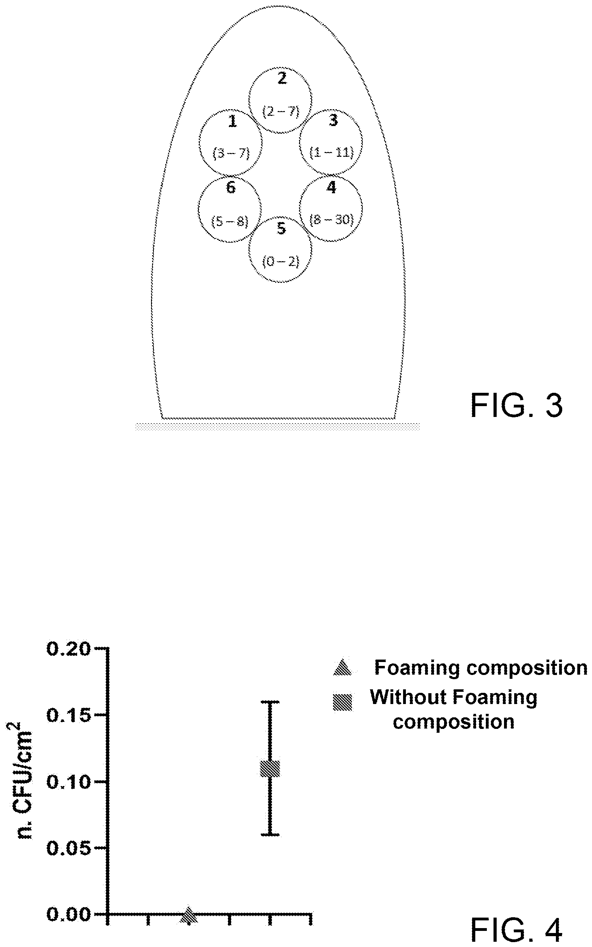

Fig. 3 shows a schematic reproduction of the toilet seat cover, with the six Petri dishes numbered 1 to 6 (in bold). For each dish a numerical interval is reported in brackets indicating the number of recovered bacterial colonies, expressed in CFU, that were observed in the three replicates, in the condition in which the foaming composition of the invention was not used;
Fig. 4 shows a graph indicating the average values and standard deviation of the number of colonies collected in the three Petri dish replicates, expressed as CFU/cm², in the presence of the foaming composition of the invention (triangle), and in its absence (square).

### EXAMPLE 1: Experimental model

The experimental model set up by the inventors is illustrated in its main components in Fig. 1. The toilet bowl 1 was made of Lexan, a resin belonging to the polycarbonate family, since this material is transparent, has a regular surface, and may be easily cut and bent. The toilet bowl thus created allows both the inclination of the walls and the level of the water at the bottom to be adjusted. The surface of the toilet seat 2 is made up of a square of one meter on each side on which the blotting paper is placed to perform the test.

The device 3 used to simulate urination is adjustable in height, position, and inclination. The flow rate is adjustable for both the flow (ml/min) and the total volume of the urine. For their experiments, the inventors chose the reference parameters of an adult man, that is, 20 ml/s for 20 s.

The liquid used by the inventors was water kept at a temperature of 37°C in order to have the same surface tension as urine and colored with methylene blue so that the secondary aerosol could leave a visible trace on the blotting paper.

Since the secondary droplets (secondary aerosol) obtained through experimentation, i.e., from the stream of colored water at 37°C on the surface of the toilet, have on average dimensions less than one millimeter in diameter, in order to analyze the data thoroughly qualitatively and quantitatively, it was necessary to take photos of the droplets at close range, parallel to the film plane. By virtue of these considerations, the paper quadrant lying on the toilet seat (70X70 cm) was divided into 4 quadrants, each 35×35 cm in size (Fig. 2 A-D).

As illustrated in Fig. 1, in the experiments of the present invention, a camera 4, in particular a Nikon D800 camera, was used with the aid of a tripod. For the analysis of the images, "Image J," a computer program for processing digital images, was used. The characteristic values of hue, saturation, and brightness were standardized and used for all experiments.

### EXAMPLE 2: Effectiveness of the foaming composition of the invention

In the experiments conducted by the inventors, the traces of secondary droplets (secondary aerosol) caused by the stream of colored water at 37°C on the surface of the toilet and released on the blotting paper are calculated as the number of blue points occupying a certain surface (for example 1386 drops, area of 1.71%). A typical result obtained from an experiment conducted in the absence of the foaming composition of the invention is shown in Fig. 2A-B. Furthermore, by evaluating the color intensity of the individual points, by means of a preliminary calibration process, the inventors traced the overall volume of dispersed fluid. The analysis of the various samples was carried out by means of an automated image analysis, the results of which are shown in Fig. 2B and D.

The effectiveness of the foaming composition of the invention in preventing and/or inhibiting the formation of secondary aerosol is clearly indicated in Fig. 2C-D, which show a sample of blotting paper resulting from an experimental test conducted as previously described but in the presence of the foaming composition on the walls of the toilet. Unlike the result of the experiment carried out in the absence of the composition of the invention (shown in Fig. 2A-B), no droplet is present on the blotting paper sample of Fig. 2C-D, equal to 0% of occupied surface. This result demonstrates the capability of the aqueous foaming composition of this invention to prevent and/or inhibit the formation of aerosols from the rebound of a liquid on a surface.

### EXAMPLE 3: Stability of the foaming composition of the invention

Of particular importance for the purposes of the function that the foaming composition of the invention must perform is its stability over time, since a formulation that dissolves rapidly will not prevent the formation of aerosols during the entire urination, whereas, conversely, a foam that is too stable is difficult to remove or requires too much water to clean the toilet bowl. Although urination has been reported to have an average duration of around 21 seconds (Yang P. et al. PNAS 2014, vol. 111; no. 33 p. 11932-11937), the act of urination itself may vary greatly due to of the variability of individuals (age, pathologies, behavioral habits) and therefore the inventors tested the stability of the foaming composition for up to 2 (two) minutes from the deposition, obtaining results comparable to those shown in the preceding paragraph.

For comparison, the inventors tried various commercially available foams obtained both from soaps and liquid or powder detergents and directly from pressurized cylinders, for example shaving foams. In none of the tested samples was found an adequate characteristic of stability, consistency, and adhesion to the toilet wall that was suitable to prevent and/or inhibit the formation of aerosols from rebound streams of urine.

### EXAMPLE 4: Antimicrobial efficacy of the foaming composition of the invention

The inventors conducted a study aimed at demonstrating that the foaming composition of the invention exerts an antimicrobial activity preventing, during urination, the formation of rebound droplets, potential carriers of pathogenic microorganisms.

For the experiments, the inventors employed a device comprising:
1) a ceramic toilet bowl;
2) a system for the stream of liquid simulating urination, consisting of a beaker (positioned 2 meters above the floor) containing 500 ml of saline solution and a silicone tube with a diameter of 0.4 cm with a tap for the flow;
3) a toilet lid, with central slot, made of cardboard, with six lidless Petri dishes containing MacConckey agar (total surface 381 cm²), fixed on the internal surface of the toilet lid to recover any bacterial cells that may have volatilized during the dispensing of the liquid stream (Fig. 3).

At the start of the process and at the end of each experiment, all surfaces were thoroughly cleansed with 70% ethyl alcohol.

A multi-resistant bacterial isolate (MDR) of *Klebsiella pneumoniae* (KP04_2019_UNIFG), obtained in 2019 from blood cultures of a patient with sepsis, was used as the pathogen.

KP04_2019_UNIFG cells were cultured in LB agar plates aerobically at 35±2°C overnight. The bacterial colonies grown on the plates were then suspended in saline solution to reach 0.5 McFarland standard (MF), corresponding to approximately 1×10⁸ CFU/ml. The suspension was then diluted in 2 liters of saline solution to reach a final bacterial load of 1×10⁵ CFU/ml.

The experiments were performed under three different conditions (in triplicate):
a) 2 liters of saline solution (negative control) were poured into the toilet and followed by a stream of liquid made with 500 ml saline solution, poured for 30 seconds;
b) 2 liters of bacterial suspension containing 1×10⁵ CFU/ml of the bacterial isolate in saline solution, used to uniformly contaminate the internal surfaces of the toilet bowl and to fill the bottom, followed by a stream of liquid made with 500 ml of saline solution, poured for 30 seconds;
c) 2 liters of bacterial suspension containing 1×10⁵ CFU/ml of the bacterial isolate in saline solution, used to uniformly contaminate the internal surfaces of the toilet bowl and to fill the bottom, followed by a layer of foam deposited on the internal walls of the toilet bowl before adding the liquid stream, followed by a liquid stream made up of 500 ml saline solution, poured in for 30 seconds.

After delivery of the stream, the MacConckey agar plates used in each experiment were incubated in ambient air at 35±2°C for 12-18 hours. The detected microbial load was expressed in recovered CFU/cm². The recovered colonies were identified at the species level by MALDI-TOF mass spectrometry. The experiments illustrated above revealed that, after incubation of 12-18 hours, the plates did not show any bacterial growth when the foaming composition of the invention was used and for the negative control, whereas for the experiments carried out in the absence of the composition of the invention, bacterial growth was observed in all the dishes analyzed (numerical ranges shown in parentheses in Fig. 3): 0.11±0.05 CFU/cm2 (mean value ± standard deviation of the collected colonies, normalized for the total area of the six dishes, in the three experimental replicates).

The results illustrated above demonstrate that the foaming composition of the invention is capable of trapping microorganisms such as bacteria, viruses, spores, fungi, and parasites, preventing their volatilization.

## Claims

1. An aqueous foaming composition comprising at least one betaine, at least one anionic surfactant, at least one dialkyl carbonate, at least one fatty alcohol with a linear or branched, saturated or unsaturated alkyl chain containing at least 4 carbon atoms, and at least one fatty acid ester with a linear or branched, saturated or unsaturated alkyl chain containing at least 4 carbon atoms.

2. The aqueous foaming composition according to claim 1, wherein the at least one betaine is selected from the group consisting of alkylbetaines, alkylamidobetaines, sulfobetaines, and any mixture thereof, and the at least one betaine is preferably present in the composition in a total amount ranging from 2% to 5% by weight of the total weight of the composition.

3. The aqueous foaming composition according to claim 1 or 2, wherein the at least one anionic surfactant is selected from the group consisting of sulfonate surfactants, alkyl sulfates, alkyl ether sulfates, alkyl aryl sulfates and any mixture thereof, and the at least one anionic surfactant is preferably present in the composition in a total amount ranging from 0.3% to 3% by weight of the total weight of the composition.

4. The aqueous foaming composition according to any of claims 1 to 3, wherein the at least one dialkyl carbonate is bis-propylheptyl carbonate, and the at least one dialkyl carbonate is preferably present in the composition in a total amount ranging from 0.5% to 3.5% by weight of the total weight of the composition.

5. The aqueous foaming composition according to any of claims 1 to 4, wherein the at least one fatty alcohol is selected from the group consisting of cetyl alcohol, stearyl alcohol and any mixture thereof, and the at least one fatty alcohol is preferably present in the composition in a total amount ranging from 0.5% to 2.5% by weight of the total weight of the composition.

6. The aqueous foaming composition according to any of claims 1 to 5, wherein the at least one fatty acid ester is selected from the group consisting of isopropyl myristate, cetearyl myristate, and any mixture thereof, and the at least one fatty acid ester is preferably present in the composition in a total amount ranging from 0.1% to 3% by weight of the total weight of the composition.

7. The aqueous foaming composition according to any of claims 1 to 6, further comprising a pH regulator.

8. The aqueous foaming composition according to claim 7, wherein the pH regulator is an organic acid, preferably lactic acid, and the pH regulator is preferably present in the composition in a total amount ranging from 0.002% to 0.02% by weight of the total weight of the composition.

9. The aqueous foaming composition according to any of claims 1 to 8, further comprising at least one deodorizing substance.

10. The aqueous foaming composition according to claim 9, wherein the at least one deodorizing substance is selected from the group consisting of triethyl citrate, essence of bergamot, antibacterial agents, ricinoleate, and any mixture thereof, and the at least one deodorizing substance is preferably present in the composition in a total amount ranging from 0.4% to 2.5% by weight of the total weight of the composition.

11. The aqueous foaming composition according to any of claims 1 to 10, further comprising a propellant gas.

12. The aqueous foaming composition according to claim 11, wherein the propellant gas is selected from the group consisting of liquefied petroleum gas (LPG), hydrofluoroalkanes, hydrocarbons and nitrogen protoxide, and the propellant gas is preferably present in the composition in a total amount ranging from 4% to 15% by weight of the total weight of the composition.

13. A method for preventing and/or inhibiting the formation of aerosols from the rebound of a liquid on a surface, the method comprising the step of coating said surface with the aqueous foaming composition according to any of claims 1 to 12.

14. The method according to claim 13, wherein the liquid is animal urine, preferably human urine, and the surface is an external surface and/or an internal surface of a toilet bowl.

15. Use of the aqueous foaming composition according to any of claims 1 to 12, for preventing and/or inhibiting the formation of aerosols from the rebound of liquid on a surface, preferably wherein the liquid is human urine and the surface is an external surface and/or an internal surface of a toilet bowl.

## Patentansprüche

1. Wässrige schäumende Zusammensetzung aufweisend mindestens ein Betain, mindestens ein anionisches Tensid, mindestens ein Dialkylcarbonat, mindestens einen Fettalkohol mit einer linearen oder verzweigten, gesättigten oder ungesättigten, mindestens 4 Kohlenstoffatome enthaltenden Alkylkette, und mindestens einen Fettsäureester mit einer linearen oder verzweigten, gesättigten oder ungesättigten, mindestens 4 Kohlenstoffatome enthaltenden Alkylkette.

2. Wässrige schäumende Zusammensetzung nach Anspruch 1, wobei das mindestens eine Betain ausgewählt ist aus der Gruppe bestehend aus Alkylbetainen, Alkylamidobetainen, Sulfobetainen und jeder Mischung davon und das mindestens eine Betain in der Zusammensetzung bevorzugt in einer Gesamtmenge im Bereich von 2 bis 5 Gewichtsprozent des Gesamtgewichts der Zusammensetzung vorhanden ist.

3. Wässrige schäumende Zusammensetzung nach Anspruch 1 oder 2, wobei das mindestens eine anionische Tensid ausgewählt ist aus der Gruppe bestehend aus Sulfonat-Tensiden, Alkylsulfaten, Alkylethersulfaten, Alkylarylsulfaten und jeder Mischung davon und das mindestens eine anionische Tensid in der Zusammensetzung bevorzugt in einer Gesamtmenge im Bereich von 0,3 bis 3 Gewichtsprozent des Gesamtgewichts der Zusammensetzung vorhanden ist.

4. Wässrige schäumende Zusammensetzung nach einem der Ansprüche 1 bis 3, wobei das mindestens eine Dialkylcarbonat ein Bis-Propylheptylcarbonat ist und das mindestens eine Dialkylcarbonat in der Zusammensetzung bevorzugt in einer Gesamtmenge im Bereich von 0,5 bis 3,5 Gewichtsprozent des Gesamtgewichts der Zusammensetzung vorhanden ist.

5. Wässrige schäumende Zusammensetzung nach einem der Ansprüche 1 bis 4, wobei der mindestens eine Fettalkohol ausgewählt ist aus der Gruppe bestehend aus Cetylalkohol, Stearylalkohol und jeder Mischung davon und der mindestens eine Fettalkohol in der Zusammensetzung bevorzugt in einer Gesamtmenge im Bereich von 0,5 bis 2,5 Gewichtsprozent des Gesamtgewichts der Zusammensetzung vorhanden ist.

6. Wässrige schäumende Zusammensetzung nach einem der Ansprüche 1 bis 5, wobei der mindestens eine Fettsäureester ausgewählt ist aus der Gruppe bestehend aus Isopropylmyristat, Cetearylmyristat und jeder Mischung davon und der mindestens eine Fettsäureester in der Zusammensetzung bevorzugt in einer Gesamtmenge im Bereich von 0,1 bis 3 Gewichtsprozent des Gesamtgewichts der Zusammensetzung vorhanden ist.

7. Wässrige schäumende Zusammensetzung nach einem der Ansprüche 1 bis 6, weiter aufweisend einen pH-Regulator.

8. Wässrige schäumende Zusammensetzung nach Anspruch 7, wobei der pH-Regulator eine organische Säure, bevorzugt Milchsäure ist und der pH-Regulator in der Zusammensetzung bevorzugt in einer Gesamtmenge im Bereich von 0,002 bis 0,02 Gewichtsprozent des Gesamtgewichts der Zusammensetzung vorhanden ist.

9. Wässrige schäumende Zusammensetzung nach einem der Ansprüche 1 bis 8, weiter aufweisend mindestens ein Desodorierungsmittel.

10. Wässrige schäumende Zusammensetzung nach Anspruch 9, wobei das mindestens eine Desodorierungsmittel ausgewählt ist aus der Gruppe bestehend aus Triethylcitrat, Bergamotteöl, antibakteriellen Mitteln, Ricinoleat und jeder Mischung davon und das mindestens eine Desodorierungsmittel in der Zusammensetzung bevorzugt in einer Gesamtmenge im Bereich von 0,4 bis 2,5 Gewichtsprozent des Gesamtgewichts der Zusammensetzung vorhanden ist.

11. Wässrige schäumende Zusammensetzung nach einem der Ansprüche 1 bis 10, weiter aufweisend ein Treibgas.

12. Wässrige schäumende Zusammensetzung nach Anspruch 11, wobei das Treibgas ausgewählt ist aus der Gruppe bestehend aus verflüssigtem Erdölgas (LPG), Fluoralkanen, Kohlenwasserstoffen und Stickstoffprotoxid und das Treibgas in der Zusammensetzung bevorzugt in einer Gesamtmenge im Bereich von 4 bis 15 Gewichtsprozent des Gesamtgewichts der Zusammensetzung vorhanden ist.

13. Verfahren zum Verhindern und/oder Hemmen der Bildung von Aerosolen aus dem Abprall einer Flüssigkeit an einer Fläche, wobei das Verfahren den Schritt des Beschichtens der Fläche mit der wässrigen schäumenden Zusammensetzung nach einem der Ansprüche 1 bis 12 aufweist.

14. Verfahren nach Anspruch 13, wobei die Flüssigkeit Urin von Lebewesen, vorzugsweise menschlicher Urin ist und die Fläche eine äußere Fläche und/oder eine innere Fläche einer Toilettenschüssel ist.

15. Verwendung der wässrigen schäumenden Zusammensetzung nach einem der Ansprüche 1 bis 12 zum Verhindern und/oder Hemmen der Bildung von Aerosolen aus dem Abprall einer Flüssigkeit an einer Fläche, wobei bevorzugt die Flüssigkeit menschlicher Urin und die Fläche eine äußere Fläche und/oder eine innere Fläche einer Toilettenschüssel ist.

## Revendications

1. Composition aqueuse moussante comprenant au moins une bétaïne, au moins un tensioactif anionique, au moins un carbonate de dialkyle, au moins un alcool gras à chaîne alkyle linéaire ou ramifiée, saturée ou insaturée, contenant au moins 4 atomes de carbone, et au moins un ester d'acide gras à chaîne alkyle linéaire ou ramifiée, saturée ou insaturée, contenant au moins 4 atomes de carbone.

2. Composition aqueuse moussante selon la revendication 1, dans laquelle la bétaïne, au moins au nombre de une, est choisie dans le groupe constitué d'alkylbétaïnes, d'alkylamidobétaïnes, de sulfobétaïnes et de tout mélange de celles-ci, et dans laquelle la bétaïne, au moins au nombre de une, est de préférence présente dans la composition en une quantité totale allant de 2 % à 5 % en poids du poids total de la composition.

3. Composition aqueuse moussante selon la revendication 1 ou 2, dans laquelle le tensioactif anionique, au moins au nombre de un, est choisi dans le groupe constitué de tensioactifs sulfonates, d'alkylsulfates, d'alkyléthersulfates, d'alkylarylsulfates et de tout mélange de ceux-ci, et dans laquelle le tensioactif anionique, au moins au nombre de un, est de préférence présent dans la composition en une quantité totale allant de 0,3 % à 3 % en poids du poids total de la composition.

4. Composition aqueuse moussante selon l'une quelconque des revendications 1 à 3, dans laquelle le carbonate de dialkyle, au moins au nombre de un, est le carbonate de bis-propylheptyle, et dans laquelle le carbonate de dialkyle, au moins au nombre de un, est de préférence présent dans la composition en une quantité totale allant de 0,5 % à 3,5 % en poids du poids total de la composition.

5. Composition aqueuse moussante selon l'une quelconque des revendications 1 à 4, dans laquelle l'alcool gras, au moins au nombre de un, est choisi dans le groupe constitué d'alcool de cétyle, d'alcool de stéaryle et de tout mélange de ceux-ci, et dans laquelle l'alcool gras, au moins au nombre de un, est de préférence présent dans la composition en une quantité totale allant de 0,5 % à 2,5 % en poids du poids total de la composition.

6. Composition aqueuse moussante selon l'une quelconque des revendications 1 à 5, dans laquelle l'ester d'acide gras, au moins au nombre de un, est choisi dans le groupe constitué de myristate d'isopropyle, de myristate de cétéaryle et de tout mélange de ceux-ci, et dans laquelle l'ester d'acide gras, au moins au nombre de un, est de préférence présent dans la composition en une quantité totale allant de 0,1 % à 3 % en poids du poids total de la composition.

7. Composition aqueuse moussante selon l'une quelconque des revendications 1 à 6, comprenant en outre un régulateur de pH.

8. Composition aqueuse moussante selon la revendication 7, dans laquelle le régulateur de pH est un acide organique, de préférence l'acide lactique, et dans laquelle le régulateur de pH est de préférence présent dans la composition en une quantité totale allant de 0,002 % à 0,02 % en poids du poids total de la composition.

9. Composition aqueuse moussante selon l'une quelconque des revendications 1 à 8, comprenant en outre au moins une substance désodorisante.

10. Composition aqueuse moussante selon la revendication 9, dans laquelle la substance désodorisante, au moins au nombre de une, est choisie dans le groupe constitué de citrate de triéthyle, d'essence de bergamote, d'agents antibactériens, de ricinoléate et de tout mélange de ceux-ci, et la substance désodorisante, au moins au nombre de une, est de préférence présente dans la composition en une quantité totale allant de 0,4 % à 2,5 % en poids du poids total de la composition.

11. Composition aqueuse moussante selon l'une quelconque des revendications 1 à 10, comprenant en outre un gaz propulseur.

12. Composition aqueuse moussante selon la revendication 11, dans laquelle le gaz propulseur est choisi dans le groupe constitué de gaz de pétrole liquéfié (GPL), d'hydrofluoroalcanes, d'hydrocarbures et de protoxyde d'azote, et dans laquelle le gaz propulseur est de préférence présent dans la composition en une quantité totale allant de 4 % à 15 % en poids du poids total de la composition.

13. Procédé pour prévenir et/ou inhiber la formation d'aérosols issus du rebond d'un liquide sur une surface, le procédé comprenant l'étape consistant à revêtir ladite surface de la composition aqueuse moussante selon l'une quelconque des revendications 1 à 12.

14. Procédé selon la revendication 13, dans lequel le liquide est de l'urine animale, de préférence de l'urine humaine, et la surface est une surface externe et/ou une surface interne d'une cuvette de toilettes.

15. Utilisation de la composition aqueuse moussante selon l'une quelconque des revendications 1 à 12 pour empêcher et/ou inhiber la formation d'aérosols provenant du rebond de liquide sur une surface, de préférence dans laquelle le liquide est de l'urine humaine et la surface est une surface externe et/ou une surface interne d'une cuvette de toilettes.
